# EUROPEAN PATENT APPLICATION

(11) **EP 0 640 905 A1**
(43) Date of publication of application: **01.03.1995**
(21) Application number: 94305955.0
(22) Date of filing: 11.08.1994
(51) Int. Cl.: G06F 3/023, G06F 3/033, G05B 19/042

(54) **Process control console for machine for manufacturing glass articles**

(30) Priority: 17.08.1993 US 107506
(71) Applicant: EMHART GLASS MACHINERY INVESTMENTS INC., Wilmington, Delaware 19899 (US)
(72) Inventor: Hwang, David K., Storrs, Connecticut 06268 (US)
(74) Representative: Randall, John Walter

(57) **Abstract**

A process control system for a machine for manufacturing glass articles comprising a display, a computer memory for storing information including text related to selected areas of the machine and an overview illustration of the machine illustrating all of the selected areas, means for presenting the overview illustration on the display, means for presenting a help button for each of the selected areas of the presented overview illustration, means for presenting a distributed help window on the display corresponding to a selected help button, the help window listing at least one help topic, means for selecting one of the listed help topics, a text button, and means for presenting a second window on the display including the portion of the text related to the selected help topic when the text button is actuated.

## Description

### SPECIFICATION

Glass articles (containers and tableware) are manufactured on complicated machines such as I.S. (individual section) machines or H-28 machines. An operator of one of these machines relies heavily on key materials to service, set up, or operate or otherwise control the article manufacturing process carried out by the machine. Among these are an operator's manual, drawings, dictionaries, parts lists and video materials like training films and the like.

The effective use of these materials, which are conventionally located at a variety of locations, is time consuming since they must be appropriately accessed.

The invention generally comprises a help system for a machine for manufacturing glass articles comprising a display, characterized by
means for storing information including text related to selected discrete areas of the machine and an overview illustration of the machine illustrating all of said selected discrete areas,
means for presenting said overview illustration on said display,
means for presenting a help button in association with each of said selected discrete areas on said presented overview illustration,
means for presenting a distributed help window on said display corresponding to a selected help button, said help window listing at least one help topic,
means for selecting one of said listed help topics,
a text button,
means for presenting a second window on said display including the portion of said text related to said selected help topic when said text button is actuated.

It is accordingly an object of the present invention to greatly improve the productivity of the operator in carrying out these process control functions.

Other objects and advantages of the present invention will become apparent from the following portion of this specification and from the accompanying drawings which illustrate in accordance with the mandate of the patent statutes a presently preferred embodiment incorporating the principles of the invention.

Referring to the drawings:
Figure 1 is a CRT presented schematic showing of a control system overview of a glass article manufacturing machine;
Figures 2 and 4 through 8 illustrates the CRT display at various times; and
Figure 3 is a schematic representation of the PC shown in Figure 1;
Figures 9A and 9B are a flow diagram illustrating the operation of the PC.

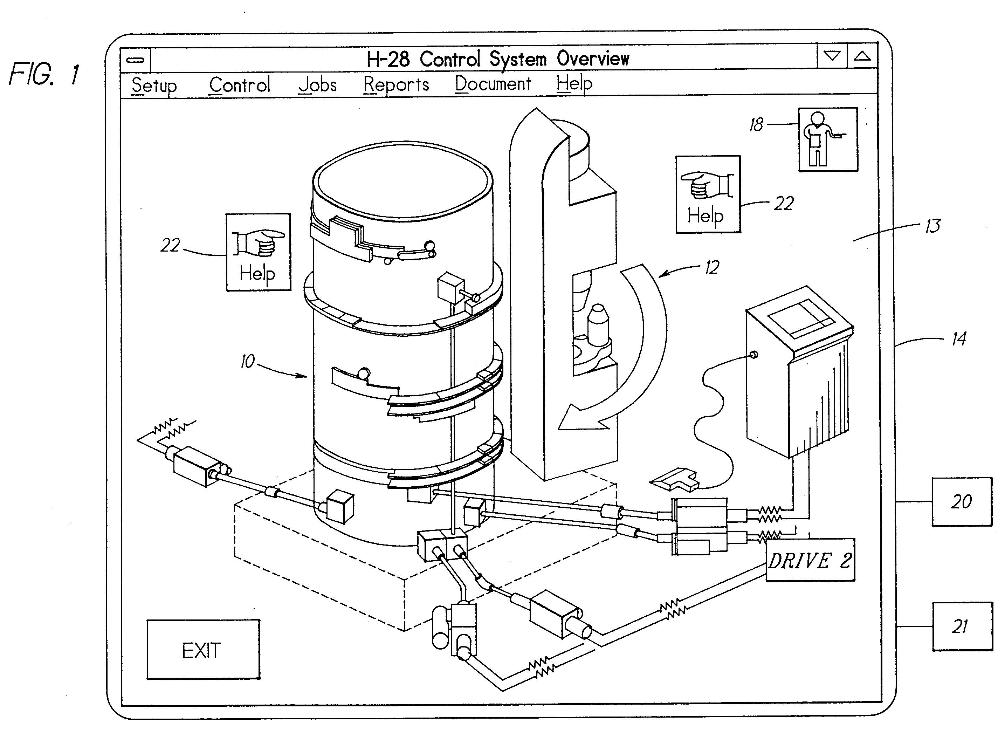

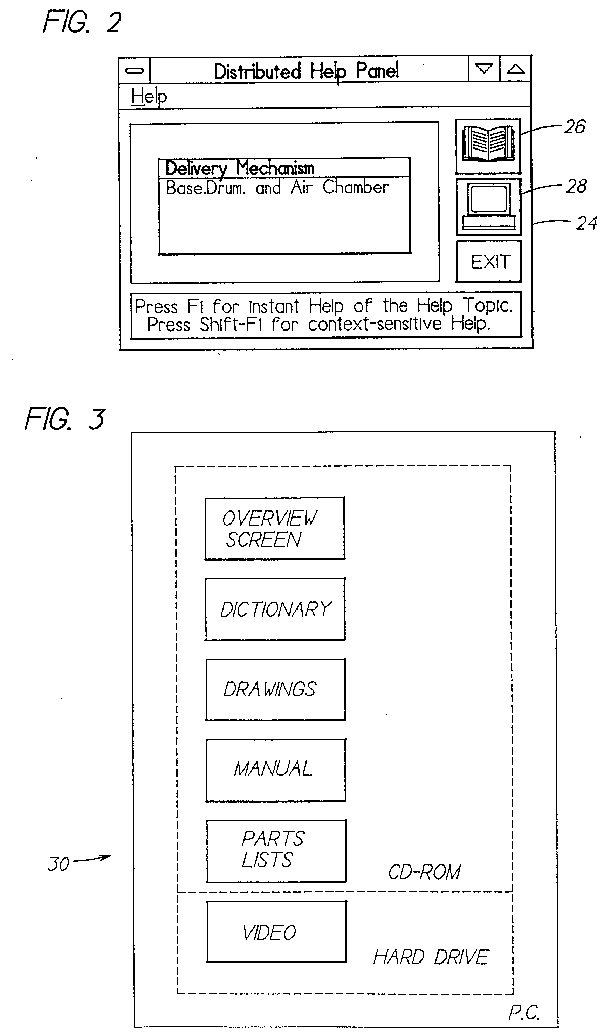

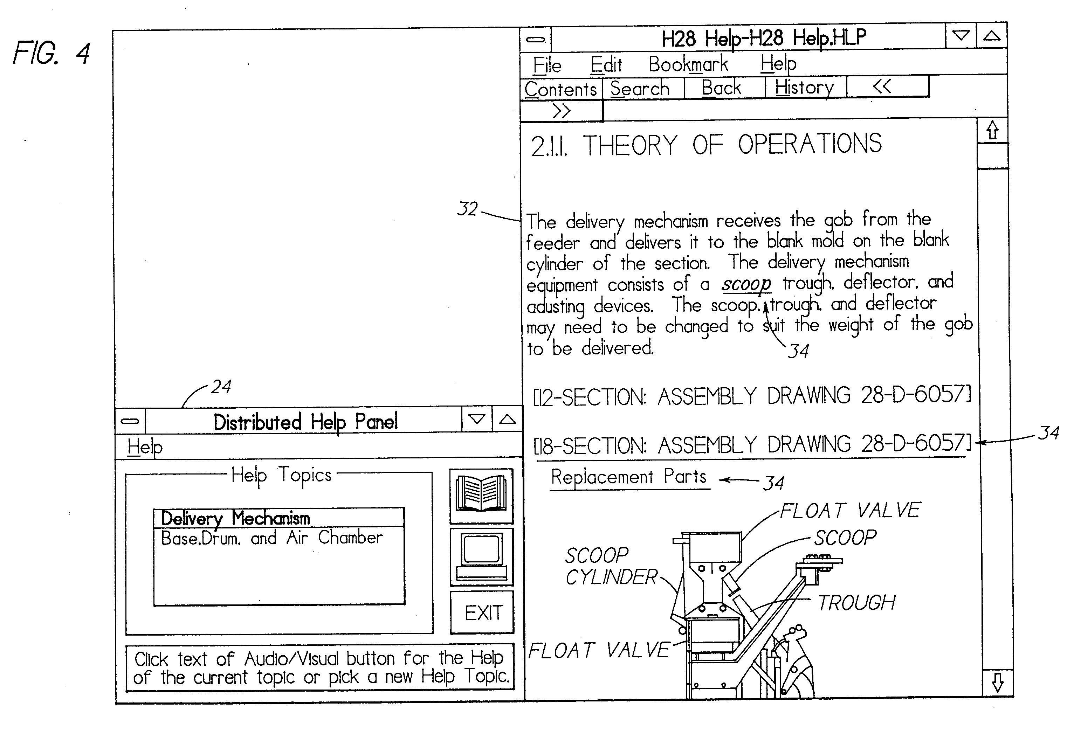

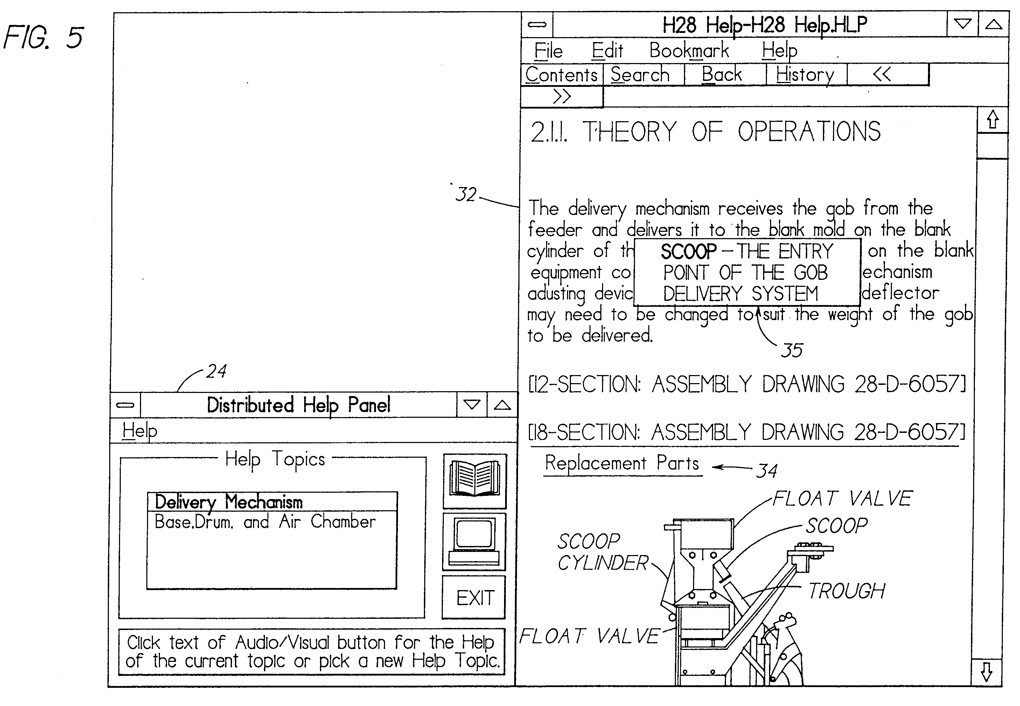

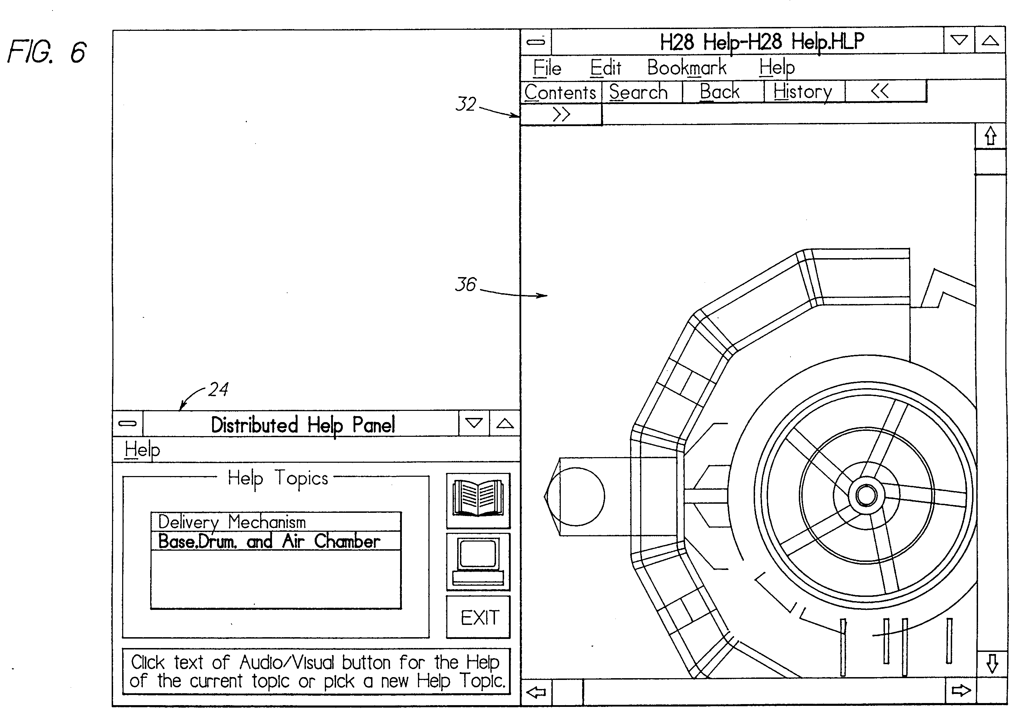

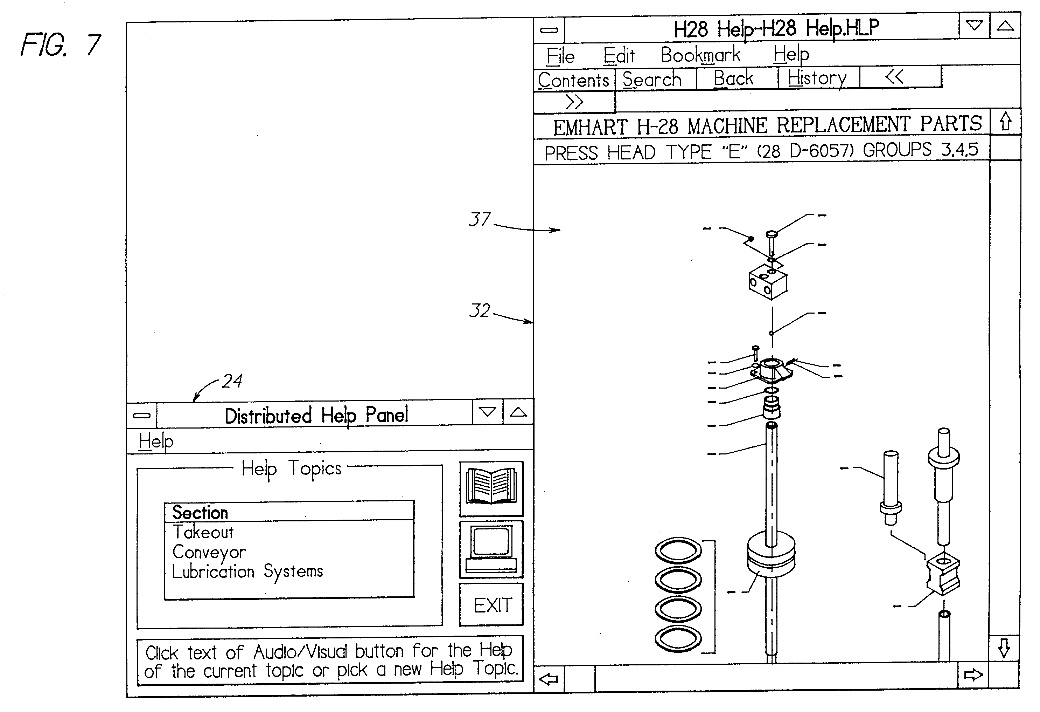

An H-28 machine forms glass articles (tableware like tumblers, for example) from gobs of molten glass. It has two basic mechanical components, a drum 10 and a plurality of identical sections 12 located about the drum. These two basic components are schematically presented in Figure 1 on a control system overview screen on the display 13 of the CRT 14 of the help system. Also present on the control system overview screen is the international symbol for help 18. By locating the cursor of the mouse 20 of the P.C. 21, on this symbol and clicking the mouse, help buttons 22 can be toggled on and off adjacent each area of the machine where help information has been isolated. The control system overview screen accordingly serves as the distribution junction for all available help information. As shown, two help buttons appear: one adjacent the drum 10 and one adjacent the section 12. By locating the cursor on one of these help buttons and clicking the mouse, the overview screen will be cancelled and replaced with a second screen, including a distributed help panel or window 24 as shown in Figure 2. (The background, which in the preferred embodiment is a photo of the entire machine, is not present for reasons of clarity.) The distributed help window 24 lists the available help topics for the area of the machine selected. The help topics for the section, in the preferred embodiment are: section; takeout; conveyor; and lubrication. The topics within a help topic can be added to as desired and additional help panels could be created by modifying the overview screen to show a third discrete machine portion and its associated help button. This distributed help panel has a selector button 26 for text presentation and a selector button 28 for video presentation. When the desired topic (delivery mechanism) has been selected with the cursor (this is schematically shown as underlying), the cursor can then be located on the text button 26 and clicked. As shown in Figure 3, the P.C. 22, which operates the CRT, has stored in memory the documentary tools of the operator: the machine manual, a dictionary of words and phrases, the drawings and parts lists identified in the manual (stored in CD-Rom format) and film material such as training films, films illustrating machine or mechanism operation, etc... (stored in hard disc format). The portion of the text (here a machine manual) corresponding to the selected topic will then appear in a second window 32 as shown in Figure 4. This material can then be scrolled, if necessary, to completely present its printed and pictorial content. As can be seen from Figure 4, selected portions 34 of the text may be highlighted in some manner (While in the drawing these highlights are defined by underlining, they may be defined by coloring the material green, for example). Highlighted material may be, for example, a drawing identification, a parts list identification or a word or phrase. When the cursor is located at a highlighted terminology, for example, a word or phrase ("scoop" in Figure 4, for example) and the mouse is clicked, a small window 35 including the definition of that word or phrase taken from the dictionary will appear superimposed on the text presentation (Figure 5). When a highlighted drawing or parts list is selected by locating the cursor over that item and clicking the mouse the text will be deleted and the identified drawing 36 (Figure 6) or parts list 37 (Figure 7) will replace it in that window 32. This window can be scrolled or enlarged as desired.

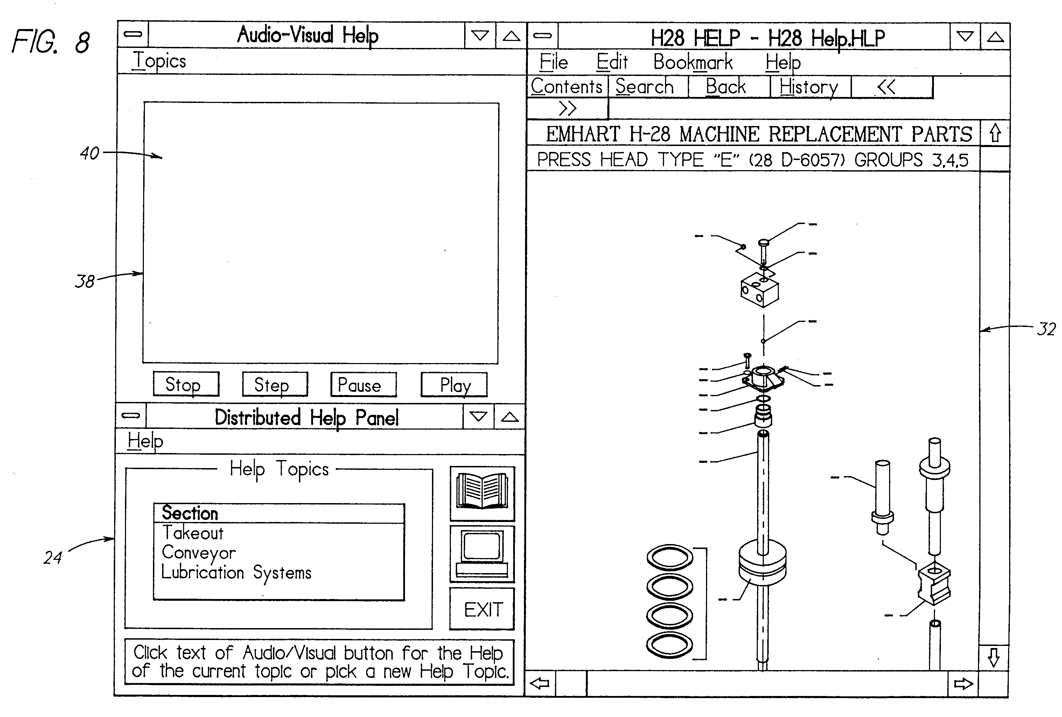

Referring again to the distributed help panel 24, when the video button 28 is selected, a third window 38 (Figure 8) will appear and a movie 40 relevant to the text, stopped at the first frame, will appear. The video window has stop (and rewind), pause, play and step (frame by frame) control buttons to control the playing of the video. The video can be a training film, a service or maintenance film, a showing of the mechanism in operation or any video of interest. The video and the manual are synchronized so that whenever a specific help topic is selected by locating the cursor, the movie will correspond to the text. The data is stored in CD-Rom format except where required to achieve the degree of resolution desired for the movie. Then hard disc storage may be required. The video may also include a voice track.

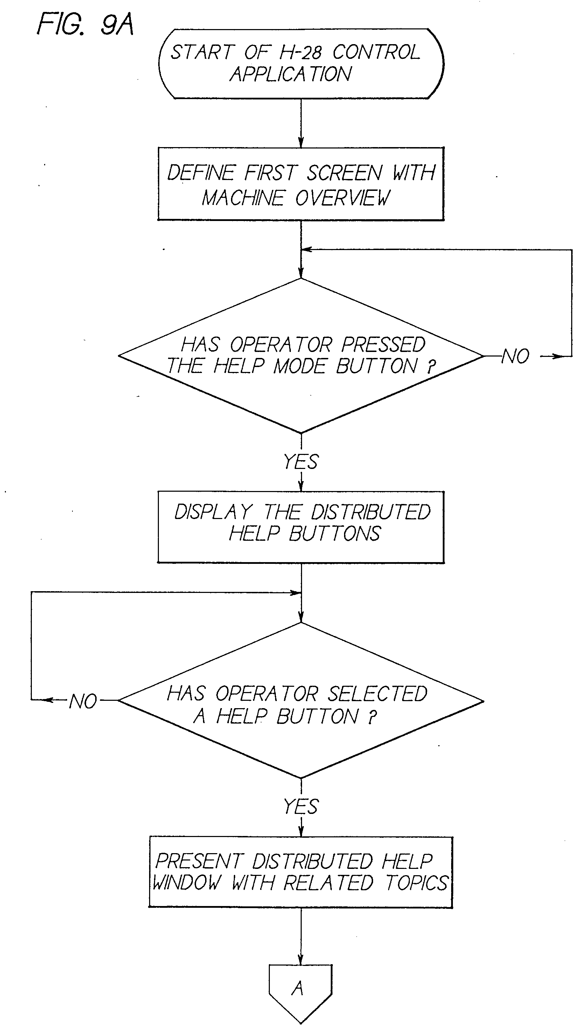

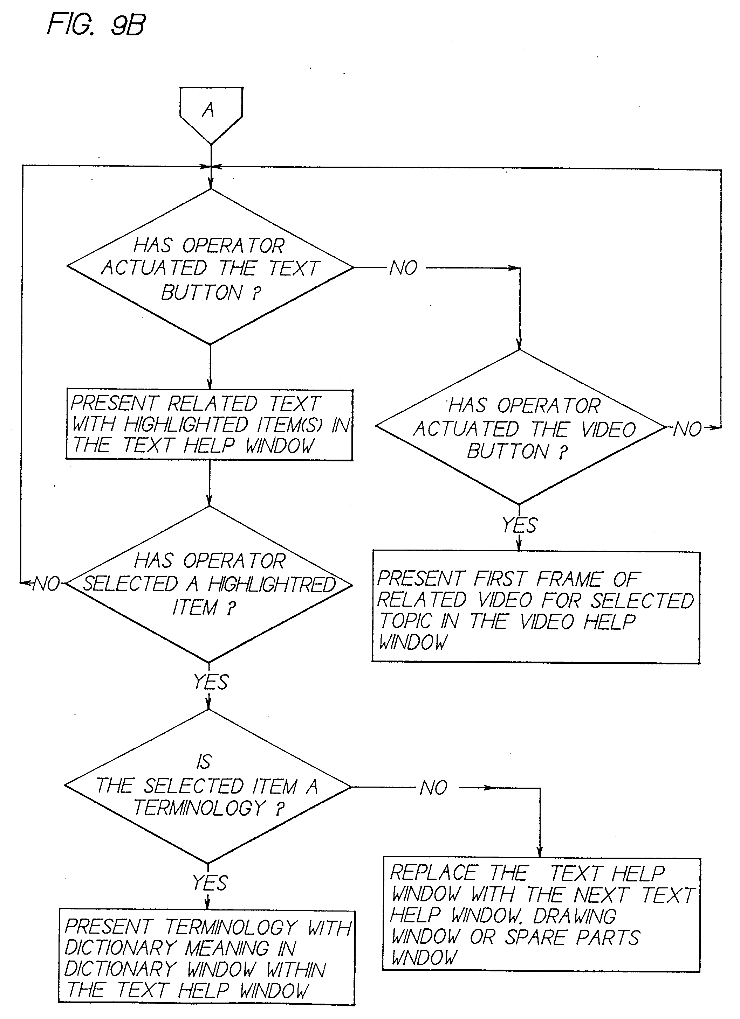

The control of the help system is illustrated in Figures 9A and 9B. The system is configured using existing software programs such as Microsoft Windows, Visual Basic Professional Toolkit, Super Video Windows, and Media Visions Pro Audio-16 sound card. As can be seen, the system can present the overview screen, including a number of help buttons. When one of the help buttons is selected the related distributed help window comes up providing the operator with all of the available topics for that structure. The system synchronizes video segments with the text so that video related to the text will be available. The operator can select video or text or both and where the text is selected, the text portion with highlighted items will be presented. When a highlighted word or phrase is selected a dictionary definition will appear superimposed over the text and when other highlighted material is selected, the text will be replaced by the selected material.

## Claims

1. A help system for a machine for manufacturing glass articles comprising a display, characterized by
means for storing information including text related to selected discrete areas of the machine and an overview illustration of the machine illustrating all of said selected discrete areas,
means for presenting said overview illustration on said display,
means for presenting a help button in association with each of said selected discrete areas on said presented overview illustration,
means for presenting a distributed help window on said display corresponding to a selected help button, said help window listing at least one help topic,
means for selecting one of said listed help topics,
a text button,
means for presenting a second window on said display including the portion of said text related to said selected help topic when said text button is actuated.

2. A process control system according to claim 1, wherein said text includes drawing and parts list identification, further comprising
means for highlighting selected identified drawings and/or parts lists presented in said second window, and
means for replacing said text in said second window with a selected one of said highlighted identified drawings and/or parts lists.

3. A process control system according to claim 1, wherein said information storage means further includes a dictionary for selected words in said text and further comprising means for highlighting selected words in said text and means for presenting a third window on said display including the definition of said words.

4. A process control system according to claim 2 wherein said distributed help window further includes a video button and said information storage means further includes at least one video segment relating to a selected topic and further comprising means for presenting a third window on said display when said video button is actuated, including the first frame of a video segment related to said selected topic and means for controlling the playing of said video segment, including means for playing, pausing, rewinding and stopping said video segment.

5. A process control system for a machine for manufacturing glass articles according to claim 1, wherein said text is an operator's manual.

6. A process control system for a machine for manufacturing glass articles according to claim 5, wherein said operator's manual includes pictorial information and written information.
